# EUROPÄISCHE PATENTSCHRIFT

(11) **EP 3 479 668 B1**
(45) Veröffentlichungstag und Bekanntmachung des Hinweises auf die Patenterteilung: **01.09.2021**
(21) Anmeldenummer: 18000807.0
(22) Anmeldetag: 11.10.2018
(51) Int. Cl.: A01B 59/041

(54) **AUFNAHMEVORRICHTUNG AN EINEM ANKOPPELBAREN GERÄT ZUR VERBINDUNG MIT UNTERLENKERN EINES TRAKTORHUBWERKS**
HOLDER DEVICE ON A DEVICE WHICH CAN BE COUPLED FOR CONNECTION TO THE LOWER ARMS OF A TRACTOR LIFTER
DISPOSITIF DE RÉCEPTION SUR UN APPAREIL POUVANT ÊTRE ACCOUPLÉ PERMETTANT LE RACCORDEMENT AUX BRAS INFÉRIEURS D'UNE MACHINE DE LEVAGE DE TRACTEUR

(30) Priorität: 07.11.2017 DE 102017125943
(43) Veröffentlichungstag der Anmeldung: 08.05.2019
(73) Patentinhaber: Kraus, Thomas, 97318 Biebelried (DE)
(72) Erfinder: Kraus, Thomas, 97318 Biebelried (DE)
(74) Vertreter: Gleim, Christian Ragnar

(56) Entgegenhaltungen:
- EP-A1- 1 084 601
- WO-A1-95/20311
- DE-A1- 2 836 825
- GB-A- 1 270 702

## Beschreibung

Die Erfindung betrifft eine Aufnahmevorrichtung an einem ankoppelbaren Gerät zur Verbindung mit Unterlenkern eines Traktorhubwerks.

Die Unterlenker eines Traktorhubwerks dienen der Ankopplung zum Beispiel von Arbeitsgeräten im Bereich der Land- und Forstwirtschaft. Die Unterlenker von Heckhubwerken sind um den Aufhängungspunkt (ein Gelenkauge) der Unterlenker am Traktor seitlich (entlang einer Fahrzeugquerachse) beweglich. Um die seitliche Auslenkung der beiden Unterlenker eines Hubwerks zu begrenzen, verfügen diese in der Regel über Seitenstreben, welche die Unterlenker stabilisieren und die seitliche Beweglichkeit begrenzen. Zur Längenverstellung verfügen Seitenstreben über eine Drehspindel, um den Abstand der Unterlenkerfanghaken, das Spreizmaß zu verstellen und auf das Kategoriemaß des anzuhängenden Gerätes einzustellen. Derartig manuell verstellbare Seitenstreben weisen jedoch ein gewisses Spiel auf, das einerseits das Ankoppeln des Arbeitsgeräts erleichtert, andererseits jedoch eine geringe seitliche Bewegung der Unterlenker und damit auch des verbundenen Arbeitsgerätes zulässt. Die Seitenstrebe kann sich meist bis zu einem festen Anschlag bewegen. Dieser kann verstellt werden, jedoch ist eine spielfreie Einstellung in der Praxis nicht erreichbar.

Ein seitliches Spiel der Unterlenker kann zeitweise durchaus auch erwünscht sein, z. B. bei Bodenbearbeitungsgeräten welche sich in Arbeitsstellung relativ zum Traktor in geringem Maße seitlich bewegen müssen. In ausgehobenem Zustand und speziell bei Straßentransporten ist dieses seitliche Spiel jedoch negativ zu bewerten. Es führt dazu, dass sich das Gerät seitlich bewegen kann und es damit speziell bei Richtungswechseln zu Schlägen auf das Hubwerk und den Traktor kommt. Im Extremfall kann dies das Fahrverhalten des Traktors negativ beeinflussen. In jedem Fall führt es jedoch zu Verschleiß am Hubwerk. Auch Hubwerke, die nicht über Seitenstreben verfügen (z. B. Fronthubwerke an Traktoren) können je nach Verschleißzustand eine geringe seitliche Bewegung des angebauten Gerätes zulassen.

Abhilfe gegen die oben aufgeführten Nachteile schaffen Seitenstreben, welche mittels eines Hydraulikzylinders längenverstellbar sind. In den Veröffentlichungen EP 1084601 und EP 2873313 sind solche hydraulischen Seitenstreben beschrieben. Diese ermöglichen es, die Länge der Seitenstreben vom Traktor aus zu verändern und in Abhängigkeit von der Hubwerksstellung des Traktors zu steuern. Die hydraulischen Seitenstreben ermöglichen es, durch Ausfahren des Zylinders, das angebaute Gerät in jeder Lage mittig zu zentrieren und spielfrei zu stabilisieren. Dabei drücken die beidseitig verbauten Seitenstreben die Unterlenker in Richtung der Längsachse des Traktors, bis diese an den fest verbauten Aufnahmeelementen für die Unterlenker am Arbeitsgerät spielfrei anliegen. Das Dokument DE 28 36 825 A1 beschreibt einen Schlepper mit einer Dreipunktaufhängung mit einem verstellbaren Abstandhalter an den unteren Lenkern 2.

Sofern eine seitliche Beweglichkeit der Unterlenker erwünscht ist, können die Seitenstreben wieder verkürzt oder auf Schwimmstellung gestellt werden. Vorzugsweise erfolgt die Starr- bzw. Schwimmstellung in Abhängigkeit von der Hubwerksstellung des Traktors. So ist es möglich, dass sich ein Arbeitsgerät in Arbeitsstellung seitlich (relativ zum Traktor) bewegen kann, in ausgehobenem Zustand und während des Transports jedoch mittig zentriert und stabilisiert wird. Die Information über die Hubwerksstellung wird dabei über eine Datenschnittstelle vom Traktor bereitgestellt. Die Hubhöhe, ab welcher das Hubwerk starr gestellt werden soll, ist an einem Bedienteil einstellbar.

Die beschriebenen hydraulischen Seitenstreben sind jedoch systembedingt immer mit dem Traktor verbunden. Ein Wechsel des Systems zwischen verschiedenen Traktoren ist in der Regel nicht vorgesehen, da das System fest mit dem Traktor verbaut ist. Das System ist daher nur an dem Traktor nutzbar, an welchem es verbaut ist. Es kann jedoch auch sinnvoll sein, dass die Funktionen, welche hydraulische Seitenstreben erfüllen, geräteseitig oder variabel nutzbar verbaut werden. Damit könnten diese Funktionen dann bei allen Geräten genutzt werden, bei welchen die zumindest zeitweise, spielfreie Stabilisierung der Unterlenker sinnvoll ist (z. B. bei einem Pflug), unabhängig davon, ob der Traktor über diese Möglichkeit verfügt.

Die Aufgabe wird durch eine Vorrichtung gemäß Anspruch 1 gelöst. Vorteilhafte Aspekte betreffen den Gegenstand der jeweiligen Unteransprüche.

Die Erfindung umfasst eine Aufnahmevorrichtung an einem ankoppelbaren (z. B. landwirtschaftliches oder forstwirtschaftliches) Gerät zur Verbindung mit Unterlenkern eines Traktorhubwerks. Die Aufnahmevorrichtung umfasst zwei Aufnahmeelemente zur Befestigung jeweils eines Unterlenkers eines Traktorhubwerks und (mindestens) ein (mittelbar oder unmittelbar) mit mindestens einem Aufnahmeelement verbundenes Verstellelement. Mindestens ein Aufnahmeelement der Unterlenker am Arbeitsgerät ist nicht fest verbaut, sondern lässt sich entlang einer Querachse bewegen, sodass sich die Aufnahmeelemente voneinander weg und aufeinander zu bewegen. Das Verstellelement ist derart ausgebildet (zum Beispiel als Hydraulikzylinder), um bei Betätigung den Abstand der Aufnahmeelemente zueinander (gegenläufig entlang einer Querachse) zu ändern. So kann eine Starrstellung erreicht werden, indem die Aufnahmeelemente am Gerät und damit die angekoppelten Unterlenker des Traktors nach außen gedrückt werden, bis die Unterlenker gegen Seitenstreben oder andere Anschlagelemente anschlagen. Auf diese Art und Weise lassen sich die Nachteile aus dem Stand der Technik überwinden und insbesondere eine Starrstellung ohne hydraulische Seitenstreben erreichen. Weil die Aufnahmevorrichtung im Gegensatz zum Stand der Technik Bestandteil des Gerätes ist, lassen sich die mit dem Gerät verbundenen Traktorhubwerke stabilisieren, auch wenn der Traktor nur über manuelle Seitenstreben verfügt.

Bevorzugt umfasst das Verstellelement einen ersten (Verstellelements-) Abschnitt und einen linear zu dem ersten beweglichen zweiten (Verstellelements-) Abschnitt. Der erste Abschnitt und der zweite Abschnitt sind entlang der Achse kontinuierlich bewegbar. Zum Beispiel wenn das Verstellelement durch einen Hydraulikzylinder gebildet ist, ist der erste Abschnitt der Zylinder und der zweite Abschnitt der Kolben. So lassen sich die Aufnahmeelemente an dem jeweiligen Abschnitt entlang der Verbindungsachse aufeinander zu und voneinander weg bewegen. Die Verstellelemente können sich zwischen den Aufnahmeelementen der Unterlenker befinden, sodass die Starrstellung und Zentrierung durch Druck bzw. durch Verlängerung der Verstellelemente erfolgt. Alternativ können sich die Verstellelemente außerhalb der Aufnahmeelemente befinden, sodass die Starrstellung und Zentrierung durch Verkürzung der Verstellelemente erfolgt. Dies ist vor allem dann sinnvoll, wenn der Bauraum zwischen den Aufnahmeelementen klein ist bzw. anderweitig benötigt wird.

Bevorzugt umfasst das Verstellelement einen Hydraulikzylinder, (elektrische) Linearantriebe oder Pneumatikzylinder.

In bevorzugter Ausgestaltung bilden der erste Abschnitt und der zweite Abschnitt eine Unterlenkertraverse oder ein Rahmenteil des Geräts. Dabei erfolgt die Verschiebung der Aufnahmeelemente für den Unterlenker linear entlang einer Führung innerhalb oder außerhalb der Unterlenkertraverse.

Ein technisch besonders bevorzugter Aspekt sieht vor, dass der erste Abschnitt und der zweite Abschnitt entlang einer Achse kontinuierlich um eine vorbestimmte Stellweite bewegbar sind, und wobei die Stellweite so groß ist, um die Unterlenker voneinander weg gegen Halteelemente gedrückt zu halten. Diese Variante ermöglicht eine Bewegung der geräteseitigen Aufnahmeelemente entlang einer (horizontalen) Fahrzeugquerachse. Dies kann beispielhaft durch Spreizung der Arme einer V-förmigen Aufnahmevorrichtung erfolgen oder durch teleskopartige Verlängerung einer Unterlenkertraverse. Bei der Spreizung der Aufnahmeelemente um einen oder mehrere Drehelemente, erfolgt die Bewegung der Aufnahmeelemente tatsächlich entlang einer Kreisbahn. Da für die Funktion der beschriebenen Vorrichtung jedoch nur der Weg entlang der Querachse des Traktors relevant ist, ist die kreisförmige Bewegung der Aufnahmeelemente auch in dem Begriff "entlang einer Querachse" eingeschlossen.

Besonders bevorzugt ist beschriebene Aufnahmevorrichtung fest oder lösbar (z. B. mittels weiterer Unterlenkerfanghaken) mit dem Arbeitsgerät verbunden. Ein technisch vorteilhafter Aspekt sieht vor, dass die Aufnahmevorrichtung derart ausgebildet ist, um mittels geeigneter Verbindungselemente lösbar an verschiedenen Maschinen angeordnet zu werden. Eine lösbar verbaute Vorrichtung kann also an verschiedenen Geräten zum Einsatz kommen und wird zwischen Traktor und Arbeitsgerät eingebaut. Bevorzugt ist die Verbindung zum Gerät durch zwei fest verbaute oder ebenfalls durch Verstellelemente bewegliche Unterlenkerfanghaken oder Ösen für die Unterlenkerbolzen des Gerätes realisiert.

In Fällen, in welchen ein Wechsel zwischen seitlich beweglichen und stabilisierten Unterlenkern nicht erforderlich ist, kann die Verschiebung der Aufnahmepunkte einmalig beim Anbau des Arbeitsgeräts erfolgen. Dazu werden die Aufnahmepunkte nach der Verbindung des Geräts vorzugsweise durch handbetätigte Verstellelemente aus der Traktorlängsmitte heraus nach außen bewegt, bis die Seitenstreben spielfrei am Anschlag anliegen. Zum Abbau werden die Aufnahmepunkte wieder aufeinander zu bewegt. Diese Art der Fixierung kann z. B. bei Maschinen sinnvoll sein, welche keine seitliche Beweglichkeit der Unterlenker erfordern oder bei Maschinen, bei welchen sich die Hubwerksposition während des Betriebs nicht ändert (z. B. Maschinen die sich über ein eigenes Fahrwerk höhengeführt werden).

Bevorzugt umfasst die Aufnahmevorrichtung eine an einer Zugmaschine anordenbare Steuereinrichtung, die derart ausgebildet ist, um das Verstellelement automatisch in Abhängigkeit vom Betriebszustand des Traktors oder des Gerätes zu betätigen. Ein Wechsel zwischen seitlich beweglichen und stabilisierten Unterlenkern erfolgt so von der Traktorkabine aus. Die verschiedenen Betriebszustände können über eine Datenschnittstelle (z. B. über die Signalsteckdose oder eine Isobus-Steckdose) abgefragt werden, und anhand dieser Information, das oder die Verstellelemente betätigt werden. Auch eigens für diesen Zweck nachgerüstete Sensoren zur Erfassung eines Betriebszustandes können hierbei Anwendung finden. Die Betriebszustände können beispielsweise die Fahrgeschwindigkeit, die Lenkstellung, die seitliche Neigung, die Hubwerkstellung oder jede andere messbare Größe am Zugfahrzeug oder am Gerät sein. Besonders bevorzugt ist weiterhin, wenn die Stabilisierung in Abhängigkeit von der Hubwerksstellung des Traktors erfolgt und sich am Bedienelement der Vorrichtung eine Hubhöhe einstellen lässt, oberhalb derer die Unterlenkeraufnahmen voneinander weg bewegt werden und unterhalb derer die Vorrichtung einfährt bzw. auf freie Beweglichkeit schaltet. Das Bedienelement kann auch in ein vorhandenes Bedienelement, z. B. ein Isobus-Terminal, integriert sein. Besonders vorteilhaft ist es, wenn zwei Verstellelemente auf der einen Seite (z. B. der jeweilige Zylinderboden) symmetrisch zur Zentriermitte angebracht und fest mit dem Gerät verbunden sind. Die jeweils andere Seite ist fest mit den beweglichen Aufnahmeelementen verbunden. Es kann vom Traktor aus zum Beispiel bei jedem Hubzyklus zwischen seitlich beweglichen und stabilisierten Unterlenkern gewechselt werden. Auf diese Art und Weise erfolgt der Wechsel zwischen starr und beweglich automatisch anhand des Betriebszustands des Traktors.

Ebenso ist es möglich, die Unterlenker mit einem vorgewählten (hydraulischen) Vorspanntruck gegen die Anschläge der Seitenstreben zu pressen, sodass bei Überschreitung dieser Vorspannkraft eine Bewegung der Unterlenker dennoch möglich ist. Hierdurch können zu hohe Spannungen am Hubwerk vermieden werden oder eine Zentrierung ohne automatisierte Steuerung erreicht werden. Das Gerät wird dabei in ausgehobenen Zustand durch den Vorspanndruck der Verstellelemente zentriert und in Arbeitsstellung, wenn durch den Bodenwiderstand höhere Kräfte auf das Hubwerk wirken, ist eine geringe seitliche Bewegung dann möglich.

Die Kraft für die Betätigung der Verstellelemente wird entweder von Hand erzeugt (zum Beispiel bei einmalig einstellbaren Aufnahmevorrichtungen über eine Spannstrebe), oder vom Traktor (z. B. über ein hydraulisches Steuergerät) oder vom Arbeitsgerät bereitgestellt.

In den meisten Fällen ist eine mittige Zentrierung des Arbeitsgerätes erwünscht. Dazu müssen beide Unterlenkeraufnahmen beweglich am Gerät angebracht sein und sich symmetrisch von der Traktorlängsmitte weg oder aufeinander zu bewegen. Die Symmetrie kann durch eine mechanische Verbindung (z. B. eine durchgehende Spindel mit gegenläufigen Gewinden auf der linken und rechten Seite bzw. gegenläufige Zahnstangen mit zentralem Ritzel) gewährleistet werden. Durch Betätigung des Verstellelements werden dann aufgrund der mechanischen Verbindung beide Aufnahmeelemente in gleichem Maße auseinander oder aufeinander zu bewegt. Sofern die beiden Seitenstreben der Unterlenker gleich eingestellt sind, erfolgt so eine mittige Zentrierung des Geräts. Auch elektronische Mittel könnten Verwendung finden, welche zum Beispiel durch Lagesensoren angesteuert werden. Auch hydraulische Methoden zur Synchronisation der beiden Aufnahmeelemente sind denkbar (zum Beispiel hydraulische Mengenteiler oder zwei in Reihe geschaltete Hydraulikzylinder, sogenannte Master-Slave-Zylinder). Generell kann die Synchronisation auf verschiedenste Weise erfolgen, um eine symmetrische, spielfreie Zentrierung zu erreichen. Sofern eine symmetrische Zentrierung nicht erforderlich ist, genügt es dass eine Unterlenkeraufnahme durch ein Verstellelement bewegt werden kann und die andere Aufnahme fest am Gerät verbaut ist.

Die Dimensionierung der Aufnahmeelemente (und der Unterlenkeraufnahmen) ist bevorzugt auf die einschlägigen Normen für den Dreipunktanbau am Traktor abgestimmt. So entsprechen der Bolzendurchmesser der Aufnahmeelemente sowie das Spreizmaß bei geringstem Abstand der beiden Unterlenkeraufnahmen zueinander den genormten Kategoriemaßen. Die Strecke, um welche sich die Aufnahmeelemente bewegen, wird ausreichend groß gewählt, sodass die Anschläge der Seitenstreben erreicht werden.

Die Erfindung wird im Folgenden anhand der in den Zeichnungen dargestellten Beispiele zusätzlich erläutert. Es zeigen:
- Fig. 1: eine schematische Darstellung einer erfindungsgemäßen Aufnahmevorrichtung an einem ankoppelbaren Gerät, in mit den Unterlenkern eines Traktorhubwerks verbunden Zustand;
- Fig. 2: schematische Darstellung einer Aufnahmevorrichtung in der Art einer Unterlenkertraverse mit zwei Verstellelementen;
- Fig. 3: schematische Darstellung einer Aufnahmevorrichtung mit zwei außenliegenden Verstellelementen;
- Fig. 4: Darstellung einer manuell verstellbaren Traverse mit einem Verstellelement mit eine Spannstrebe mit zwei gegenläufigen Gewindespindeln; und
- Fig. 5: Darstellung einer hydraulisch verstellbaren Traverse mit einem Verstellelement mit einer mit Druck beaufschlagbare Fluidkammer, welche die mit dem Verstellelement verbundenen Aufnahmeelemente nach außen drückt.

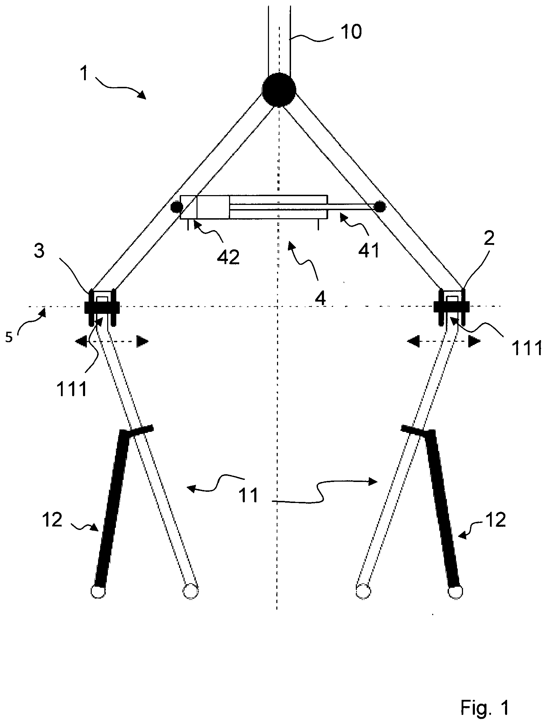

In **Fig. 1** ist eine schematische Darstellung einer erfindungsgemäßen Aufnahmevorrichtung 1. Die Darstellung zeigt eine Aufnahmevorrichtung 1 an einem ankoppelbaren Gerät 10, in mit den Unterlenkern 11 eines Traktorhubwerks verbunden Zustand. Die Aufnahmevorrichtung 1 ist an einem nur angedeutet dargestellten ankoppelbaren Gerät 10 befestigt. Die Aufnahmevorrichtung 1 ist mit den Unterlenkern 11 eines Traktorhubwerks verbunden. Bei dem Gerät 10 handelt es sich zum Beispiel um ein landwirtschaftliches Arbeitsgerät 10 zur Ankopplung an eine Zugmaschine (nicht dargestellt), die über ein Traktorhubwerk (Dreipunkthubwerk) mit Unterlenkern 11 verfügt. Die Unterlenker 11 sind mit manuell verstellbaren Seitenstreben 12 ausgestattet, die das Spiel begrenzen und ein Spreizmaß bestimmen. Die Unterlenker 11 werden gegen die Seitenstreben 12 spielfrei stabilisiert (gehalten), indem die Unterlenker 11 nach außen entlang der Querachse 5 gespreizt und gegen die Seitenstreben 12 gedrückt werden.

Die Aufnahmevorrichtung 1 hat zwei Aufnahmeelemente 2, 3 die komplementär zu Unterlenkerfanghaken 111 jeweils am Ende der Unterlenker 11 ausgebildet sind.

Die Aufnahmevorrichtung 1 hat ein mit beiden Aufnahmeelementen 2, 3 verbundenes Verstellelement 4, welches im gezeigten Beispiel in der Form eines Hydraulikzylinders dargestellt ist. Bei Betätigung des Verstellelements 4 wird der Abstand der Aufnahmeelemente 2, 3 zueinander geändert. Eine spielfreie Stabilisierung wird dadurch möglich, dass das Verstellelement 4 die Unterlenker 11 voneinander weg bewegt, bis diese gegen die Seitenstreben 12 gedrückt werden.

Das Verstellelement 4 ist als Hydraulikzylinder ausgebildet mit einem ersten Abschnitt 41 in Form eines Hydraulikkolbens und einen linear zu dem ersten beweglichen zweiten Abschnitt 42 in Form eines Zylinders, in dem sich der Kolben bewegt. Der Kolben 41 wird mittels Hydraulikflüssigkeit durch die Hydraulikleitungen 47 linear entlang einer Bewegungsrichtung mit einer Kraft beaufschlagt, um die beiden mit dem Hydraulikzylinder 4 verbundenen Aufnahmeelemente 2, 3 auseinander zu drücken.

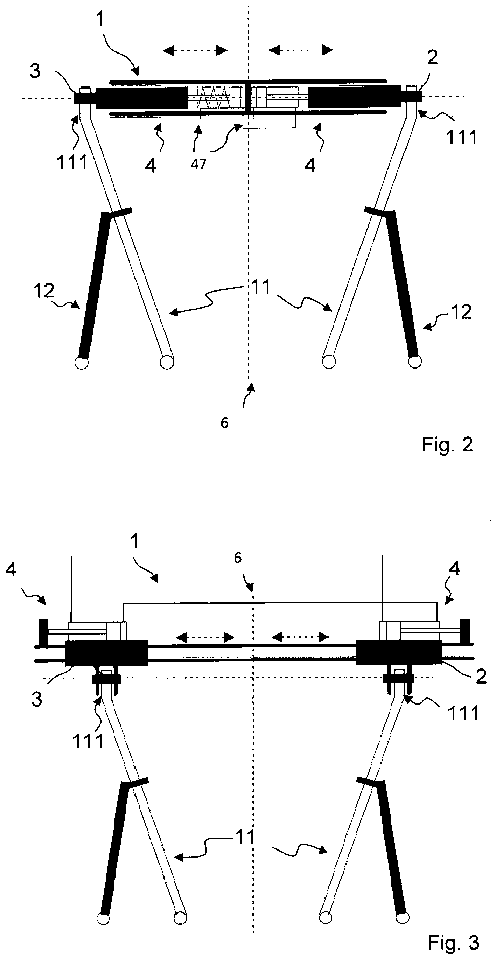

In **Fig. 2** ist eine Aufnahmevorrichtung 1 gezeigt, wie sie zum Beispiel in der Art einer Unterlenkertraverse an den Unterlenkern 11 einer Zugmaschine befestigbar ist. Diese Art der Aufnahmevorrichtung 1 kann ebenso den Rahmenteil eines Geräts (nicht dargestellt) bilden. Die gezeigte Aufnahmevorrichtung 1 hat zwei Verstellelemente 4 (Hydraulikzylinder), die durch eine hydraulische Folgeschaltung symmetrisch verstellbar sind, um jeweils die Aufnahmeelemente 2, 3 auseinander zu drücken. Aufgrund der symmetrischen Betätigung lässt sich das Gerät mittig in Bezug auf die Unterlenker 11 der Zugmaschine (z. B. Traktormittelachse 6) fixieren.

Die in **Fig. 3** gezeigte Aufnahmevorrichtung 1 bildet einen Rahmenteil eines Geräts, wobei auch hier zwei Verstellelemente 4 vorgesehen sind, mit denen die Unterlenker 11 einer Zugmaschine auseinander gedrückt werden. Hier sind die Verstellelemente 4 jedoch außerhalb der Aufnahmeelemente 2, 3 an der Maschine befestigt, sodass die Starrstellung durch einfahren der Verstellelemente 4 erfolgt. Diese Art der Aufnahmevorrichtung 1 kann bevorzugt den Rahmenteil eines Geräts bilden. Die gezeigten Verstellelemente 4 sind durch eine hydraulische Folgeschaltung symmetrisch verstellbar, sodass die Unterlenker 11 mittels der mit den Unterlenkerfanghaken 111 verbundenen Aufnahmeelemente 2, 3 symmetrisch zur Längsachse 6 fixierbar sind.

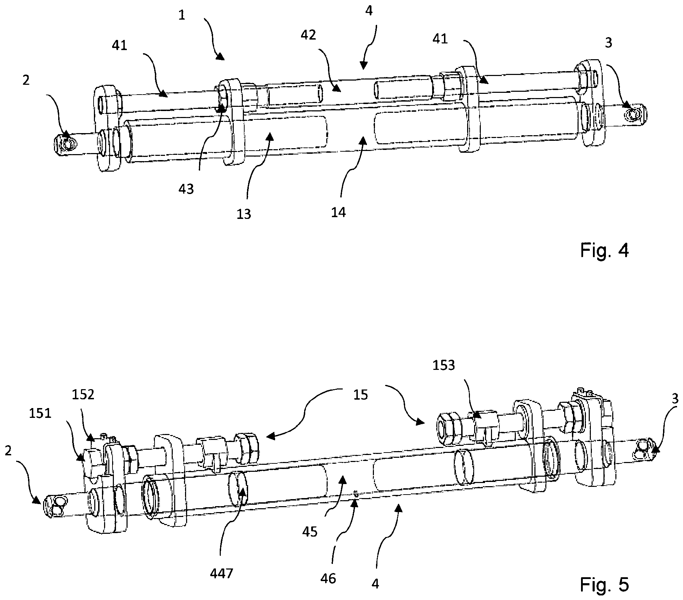

In **Fig. 4** ist eine Aufnahmevorrichtung 1 mit manuell betätigbaren Verstellelement 4 gezeigt, wie sie z. B. an einem Rahmenteil oder der Deichsel eines Gerätes 10 befestigt sein könnte. Die Aufnahmeelemente 2, 3 werden mit Kugelhülsen bestückt und können sodann mit den Unterlenkern 11 eines Traktors verbunden werden. Der Mittelteil des Verstellelements 4 ist als Spannstrebe 42 ausgeführt und besitzt ein rechtsgängiges und ein linksgängiges Gewinde 41. Der Mittelteil 42 ist drehbar zwischen zwei Anschlägen gelagert, die beiden Gewindestangen 41 sind fest (nicht drehbar) mit den Aufnahmeelementen 2,3 verbunden. Durch Drehen der Spannstrebe 42 z. B. mit Hilfe eines Maulschlüssels werden die an beiden Enden eingeschraubten Gewindestangen 41 symmetrisch entlang einer Querachse aufeinander zu oder voneinander weg bewegt. Damit bewegen sich ebenfalls die mit den Gewindestangen 41 verbundenen Aufnahmelemente 2, 3. Diese befinden sich an einer Welle 13, welche in der Lage ist die benötigte Zugkraft und Tragekraft für das Gerät 10 aufzunehmen. Die Welle 13 ist geteilt um die gegenläufige Bewegung der Aufnahmeelemente 2, 3 zu ermöglichen. Die beiden inneren Enden stecken in einer passgenauen Führung 14, welche hier in Form eines dickwandigen zylindrischen Rohres dargestellt ist. Beim Ankoppeln des Gerätes 10 an einen Traktor mit außenliegenden Seitenstreben 12 wird die Aufnahmevorrichtung 1 auf das Spreizmaß der Unterlenker eingestellt, um die Fanghaken 111 der Unterlenker 11 zu koppeln. Nach der Verbindung der Unterlenker 11 wird durch Drehen des Mittelteils 42 des Verstellelements 4 der Abstand der Aufnahmeelemente 2, 3 vergrößert, sodass die Seitenstreben 12 des Traktors in Richtung ihres Anschlags gedrückt werden. Damit sich der Abstand der Aufnahmeelemente 2, 3 im Betrieb des Gerätes 10 nicht mehr ändert, kann das Verstellelement 4 mittels eines Fixierelements 43 fixiert werden. Sofern die Unterlenker 11 einen Anschlag zur Traktormitte hin aufweisen (z. B. bei Raupentraktoren) kann die Fixierung auch durch Verkürzung des Abstandes der Aufnahmeelemente 2,3 erfolgen.

In **Fig. 5** ist eine teilweise ausgefahrene Aufnahmevorrichtung 1 mit hydraulischem Verstellelement 4 gezeigt. Anders als in Fig. 4 bildet nun die geteilte Welle 13 bzw. 41 selbst die beweglichen Teile des Verstellelements 4, das zylindrische Führungsrohr 14 bzw. 42 bildet den unbeweglichen Mittelteil des Verstellelements 4. Die Wellenenstücke 13 können im Führungsrohr 14 hin und her gleiten, sie sind jedoch mittels Dichtungen 44 zum Führungsrohr 14 hin abgedichtet und bilden somit einen Hydraulikzylinder mit zwei gegenläufigen Kolben. Durch die Beaufschlagung der Fluidkammer 45 mit hydraulischen Druck über eine mittige Bohrung 46 werden die beweglichen Teile des Verstellelements 41 und die damit verbundenen Aufnahmeelemente 2,3 nach außen bewegt. Damit die Aufnahmeelemente 2,3 nicht zu weit nach außen gedrückt werden oder zu weit nach innen gleiten (über die Bohrung hinaus), ist an der Aufnahmevorrichtung 1 beidseitig ein einstellbarer Anschlag 15 gezeigt. Dieser soll auch den vollständigen Ausstoß der geteilten Welle 41 aus dem Führungsrohr 42 verhindern, wenn die Fluidkammer 45 mit Druck beaufschlagt wird, ohne dass die Aufnahmeelemente 2,3 mit den Unterlenkerfanghaken 111 eines Zugfahrzeugs verbunden sind. Der Anschlag besteht aus einer Schraube 151 deren Drehung durch ein Fixierelement 152 unterbunden werden kann. Durch Lösen des Fixierelements 152 und anschließender Drehung der Schraube 151 wird die nicht drehbare Anschlagmutter 153 auf dem Gewinde der Schraube 151 bewegt und so der maximal mögliche Abstand (bzw. minimale mögliche Abstand bei weiterer Anschlagmutter; nicht gezeigt) der Aufnahmeelemente 2,3 verändert. Sofern die beiden Anschläge 15 gleich eingestellt sind, ist so auch ein symmetrischer Anbau des Geräts gewährleistet. Sobald die Fluidkammer 45 drucklos geschaltet wird, kann das darin befindliche Fluid von den Wellenstücken 41 durch äußere Krafteinwirkung (z. B. Zugkraft des Fahrzeugs) verdrängt werden und die Aufnahmevorrichtung 1 verkürzt sich und ermöglicht so den Unterlenkern 11 des Zugfahrzeugs mehr Bewegungsfreiheit.

## Patentansprüche

1. Aufnahmevorrichtung (1) an einem ankoppelbaren Gerät (10) zur Verbindung mit Unterlenkern (11) eines Traktorhubwerks, wobei die Aufnahmevorrichtung (1) zwei Aufnahmeelemente (2, 3) umfasst, die ausgebildet sind zur Befestigung jeweils eines Unterlenkers (11) eines Traktorhubwerks, und wobei die Aufnahmevorrichtung (1) mindestens ein Verstellelement (4) umfasst, welches mit mindestens einem der beiden Aufnahmeelemente (2, 3) verbunden ist, wobei das Verstellelement (4) derart ausgebildet ist, um bei Betätigung den Abstand der Aufnahmeelemente (2, 3) zueinander zu ändern.

2. Aufnahmevorrichtung (1) nach Anspruch 1, wobei das Verstellelement (4) einen ersten Abschnitt (41) und einen linear zu dem ersten beweglichen zweiten Abschnitt (42) umfasst, und der erste Abschnitt (41) und der zweite Abschnitt (42) entlang einer Achse kontinuierlich bewegbar sind.

3. Aufnahmevorrichtung (1) nach Anspruch 2, wobei das Verstellelement einen Hydraulikzylinder, elektrische Linearantriebe oder Pneumatikzylinder umfasst.

4. Aufnahmevorrichtung (1) nach Anspruch 2 oder 3, wobei der erste Abschnitt (41) und der zweite Abschnitt (42) von einer Unterlenkertraverse oder einem Rahmenteil des Geräts umfasst sind.

5. Aufnahmevorrichtung (1) nach einem der Ansprüche 2 bis 4, wobei der erste Abschnitt (41) und der zweite Abschnitt (42) entlang Achse kontinuierlich um eine vorbestimmte Stellweite bewegbar sind, und wobei die Stellweite so groß ist, um die Unterlenker voneinander weg gegen Halteelemente zu gedrückt zu halten.

6. Aufnahmevorrichtung (1) nach einem der vorangehenden Ansprüche, welche Aufnahmevorrichtung (1) lösbar an einem Arbeitsgerät (10) angeordnet ist.

7. Aufnahmevorrichtung (1) nach einem der vorangehenden Ansprüche, wobei die Aufnahmevorrichtung (1) derart ausgebildet ist, um mittels Unterlenkerfanghaken (111) lösbar an verschiedenen Geräten angeordnet zu werden.

8. Aufnahmevorrichtung (1) nach einem der vorangehenden Ansprüche, welche Aufnahmevorrichtung (1) ferner ein Kopplungselement für einen Oberlenker umfasst, die im angekoppelten Zustand eine Drehung der Aufnahmevorrichtung (1) verhindert.

9. Aufnahmevorrichtung (1) nach einem der Ansprüche 5 bis 7, ferner umfassend ein Fixierelement zur Feststellung des Verstellelements (4).

10. Aufnahmevorrichtung (1) nach einem der vorangehenden Ansprüche, ferner umfassend eine Steuereinrichtung, die derart ausgebildet ist, um das Verstellelement (4) in Abhängigkeit vom Betriebszustand des Zugfahrzeugs oder des Gerätes automatisch zu betätigen.

11. Aufnahmevorrichtung (1) nach einem der vorangehenden Ansprüche, wobei zwei Aufnahmeelemente (2,3) mit einem mittig und symmetrisch zur Längsachse (6) angeordneten Verstellelement (4) verbunden sind,wobei es sich beim Verstellelement (4) um eine Spannhülse (42) mit an beiden Enden gegenläufigen Gewindespindeln (41) handelt, wobei die Spannhülse (42) mittig fixiert, jedoch drehbar angeordnet ist und wobei die beiden Gewindespindeln (41) nicht drehbar mit den Aufnahmeelementen (2,3) verbunden sind und wobei die Aufnahmeelemente (2,3) derart ausgebildet sind, um sich durch Drehen der Spannhülse (42) symmetrisch zur Längsachse (6) aufeinander zu oder voneinander weg zu bewegen.

12. Aufnahmevorrichtung (1) nach einem der vorangehenden Ansprüche, wobei das Verstellelement (4) ein Hydraulikzylinder ist, welcher eine mit Druck beaufschlagbare Fluidkammer (45) beinhaltet wodurch sich die mit dem Verstellelement (4) verbundene Aufnahmevorrichtungen (2,3) bewegen lassen, und wobei der maximale oder minimale Abstand der Aufnahmeelemente (2,3) durch mechanische Anschläge (15) am Gerät begrenzt wird.

13. Aufnahmevorrichtung (1) nach den vorherigen Ansprüchen, wobei das Verstellelement (4) aus zwei Wellenhälften (13 bzw. 41) besteht welche jeweils zur Längsmitte (6) hin die Kolbenstangen eines Hydraulikzylinders bilden und in Richtung Geräteaußenseite direkt in die Aufnahmeelemte (2,3) übergehend ausgebildet sind, und wobei das Führungsrohr (14 bzw. 42) des Verstellelements (4) eine mit Druck beaufschlagbare Fluidkammer (45) oder zwei getrennte Fluidkammern beinhaltet.

## Claims

1. Holding device (1) disposed on a hitchable implement (10) for connection to lower arms (11) of a tractor hoist, wherein the holding device (1) comprises two holding elements (2, 3) which are designed for fastening, in each case, a lower arm (11) of a tractor hoist, and wherein the holding device (1) comprises at least one setting member (4) which is connected to at least one of the two holding elements (2, 3), wherein the setting member (4) is designed in such a way that, when actuated, the clearance between the holding elements (2, 3) is modified.

2. Holding device (1) according to claim 1, wherein the setting member (4) comprises a first portion (41) and a second portion (42) being linearly movable with respect to the first portion, and the first portion (41) and the second portion (42) are continuously movable along an axis.

3. Holding device (1) according to claim 2, wherein the setting member comprises a hydraulic cylinder, electric linear drives or pneumatic cylinders.

4. Holding device (1) according to claim 2 or 3, wherein the first portion (41) and the second portion (42) are incorporated in a lower arm crossbar or a frame part of the implement.

5. Holding device (1) according to any one of claims 2 to 4, wherein the first portion (41) and the second portion (42) are continuously movable along an axis by a predetermined setting width, and wherein the setting width is dimensioned so as to keep the lower arms pressed away from each other against the holding elements.

6. Holding device (1) according to any one of the preceding claims, which holding device (1) is detachably arranged on a work implement (10).

7. Holding device (1) according to any one of the preceding claims, wherein the holding device (1) is designed to be detachably arranged on different implements by means of lower arm catch hooks (111).

8. Holding device (1) according to any one of the preceding claims, which holding device (1) further comprises a hitching element for an upper arm, which, in the hitched state, prevents rotation of the holding device (1).

9. Holding device (1) according to any one of claims 5 to 7, further comprising a fixing member for fixing the setting member (4).

10. Holding device (1) according to any one of the preceding claims, further comprising a control device configured to automatically actuate the setting member (4) in accordance with the operating state of the towing vehicle or the implement.

11. Holding device (1) according to any one of the preceding claims, wherein two holding elements (2, 3) are connected to a setting member (4) arranged centrally and symmetrically to the longitudinal axis (6), wherein the setting member (4) is a clamping sleeve (42) with threaded rods (41) running in opposite directions at both ends, wherein the clamping sleeve (42) is centrally fixed but arranged in a rotatable fashion, and wherein the two threaded rods (41) are connected in a non-rotatable fashion to the holding elements (2, 3), and wherein the holding elements (2, 3) are designed in such a way that they can move towards or away from each other symmetrically to the longitudinal axis (6) by means of rotating the clamping sleeve (42).

12. Holding device (1) according to any one of the preceding claims, wherein the setting member (4) is a hydraulic cylinder which contains a fluid chamber (45) which can be pressurized, whereby the holding devices (2, 3) connected to the setting member (4) can be moved, and wherein the maximum or minimum clearance between the holding elements (2, 3) is limited by mechanical stops (15) disposed on the implement.

13. Holding device (1) according to the preceding claims, wherein the setting member (4) consists of two shaft halves (13 or 41) which each form the piston rods of a hydraulic cylinder towards the longitudinal center (6) and are designed to merge directly into the holding elements (2, 3) in the direction of the outside of the implement, and wherein the guide tube (14 or 42) of the setting member (4) contains a fluid chamber (45) which can be pressurized or two separate fluid chambers.

## Revendications

1. Dispositif de retenue (1) disposé sur un outil d'attelage (10) et destiné à être relié à des bras inférieurs (11) d'un mécanisme de levage de tracteur, le dispositif de retenue (1) comprenant deux éléments de retenue (2, 3) qui sont conçus pour fixer, dans chaque cas, un bras inférieur (11) d'un mécanisme de levage de tracteur, et dans lequel le dispositif de retenue (1) comprend au moins un organe de réglage (4) qui est relié à au moins l'un des deux éléments de retenue (2, 3), l'organe de réglage (4) étant conçu de telle sorte que, lorsqu'il est actionné, l'écart entre les éléments de retenue (2, 3) est modifié.

2. Dispositif de retenue (1) selon la revendication 1, dans lequel l'organe de réglage (4) comprend une première partie (41) et une seconde partie (42) étamt mobile linéairement par rapport à la première partie, et la première partie (41) et la seconde partie (42) sont mobiles en continu le long d'un axe.

3. Dispositif de retenue (1) selon la revendication 2, dans lequel l'organe de réglage comprend un cylindre hydraulique, des entraînements linéaires électriques ou des cylindres pneumatiques.

4. Dispositif de retenue (1) selon les revendications 2 ou 3, dans lequel la première partie (41) et la seconde partie (42) sont logées dans une traverse de bras inférieur ou une partie de cadre de l'outil.

5. Dispositif de retenue (1) selon l'une quelconque des revendications 2 à 4, dans lequel la première partie (41) et la seconde partie (42) sont mobiles en continu le long d'une axe par une largeur de réglage prédéterminée, et dans lequel la largeur de réglage est telle qu'elle permet de maintenir les bras inférieurs pressés à l'écart les uns des autres contre des éléments de retenue.

6. Dispositif de retenue (1) selon l'une quelconque des revendications précédentes, lequel dispositif de retenue (1) est disposé de manière amovible sur un outil de travail (10).

7. Dispositif de retenue (1) selon l'une quelconque des revendications précédentes, dans lequel le dispositif de retenue (1) est conçu pour être disposé de manière amovible sur différents outils au moyen de crochets d'encastrement de bras inférieurs (111).

8. Dispositif de retenue (1) selon l'une quelconque des revendications précédentes, lequel dispositif de retenue (1) comprend en outre un élément d'attelage pour un bras supérieur, qui, à l'état attelé, empêche la rotation du dispositif de retenue (1).

9. Dispositif de retenue (1) selon l'une quelconque des revendications 5 à 7, comprenant en outre un organe de fixation de l'organe de réglage (4).

10. Dispositif de retenue (1) selon l'une quelconque des revendications précédentes, comprenant en outre un dispositif de commande configuré pour actionner automatiquement l'organe de réglage (4) en fonction de l'état de fonctionnement du véhicule de remorquage ou de l'outil.

11. Dispositif de retenue (1) selon l'une quelconque des revendications précédentes, dans lequel deux éléments de retenue (2, 3) sont reliés à un organe de réglage (4) disposé de manière centrale et symétrique par rapport à l'axe longitudinal (6), dans lequel l'organe de réglage (4) est une douille de serrage (42) avec des tiges filetées (41) s'étendant dans des directions opposées aux deux extrémités, dans lequel la douille de serrage (42) est fixée au centre mais disposée de manière rotative, et dans lequel les deux tiges filetées (41) sont reliées aux éléments de retenue (2, 3) de manière non-rotative, et dans lequel les éléments de retenue (2, 3) sont conçus pour être rapprochés ou éloignés l'un de l'autre symétriquement par rapport à l'axe longitudinal (6) en faisant tourner la douille de serrage (42).

12. Dispositif de retenue (1) selon l'une des revendications précédentes, dans lequel l'organe de réglage (4) est un vérin hydraulique qui contient une chambre à fluide (45) pouvant être mise sous pression, ce qui permet de déplacer les éléments de retenue (2, 3) reliés à l'organe de réglage (4), et dans lequel l'écart maximal ou minimal des éléments de retenue (2, 3) est limité par des butées mécaniques (15) disposées sur l'outil.

13. Dispositif de retenue (1) selon les revendications précédentes, dans lequel l'organe de réglage (4) se compose de deux moitiés d'arbre (13 ou 41) qui forment chacune les tiges de piston d'un vérin hydraulique vers le centre longitudinal (6) et sont conçues pour se fusionner directement dans les éléments de retenue (2, 3) en direction de l'extérieur de l'outil, et dans lequel le tube de guidage (14 ou 42) de l'organe de réglage (4) contient une chambre à fluide (45) pouvant être mise sous pression ou deux chambres à fluide séparées.
